Europäisches Patentamt

European Patent Office

Office européen des brevets

(19)

(11) EP 1 547 972 A2

(12) EUROPEAN PATENT APPLICATION

(43) Date of publication:
29.06.2005 Bulletin 2005/26

(51) Int Cl.$^7$: **C01B 3/38**, C01B 13/02, B01D 53/04, B01D 53/047, C04B 35/01, C04B 35/26, C04B 35/45

(21) Application number: 04258017.5

(22) Date of filing: 21.12.2004

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **22.12.2003 US 531780 P**
**06.12.2004 US 5408**
**06.12.2004 US 5422**
**06.12.2004 US 5579**
**06.12.2004 US 5411**

(71) Applicant: **THE BOC GROUP, INC.**
**Murray Hill, New Providence,**
**New Jersey 07974-2082 (US)**

(72) Inventors:
• **Bülow, Martin**
**Basking Ridge New Jersey 07920 (US)**

• **Böer, Jürgen**
**99734 Nordhausen (DE)**
• **Burckhardt, Wolfgang**
**07629 Hermsdorf (DE)**
• **Guth, Hans Ulrich**
**17491 Greifswald (DE)**
• **Ullmann, Helmut**
**01705 Freital (DE)**
• **Vashook, Vladimir V.**
**10169 Dresden (DE)**

(74) Representative: **Wickham, Michael**
**The BOC Group plc,**
**Chertsey Road**
**Windlesham, Surrey GU20 6HJ (GB)**

(54) **Oxygen sorbent compositions and methods of using same**

(57) A crystalline ceramic oxide of the general formula (1), (2), (3), (4), (5), (6), (7), (8), (9), or (10):

$$A_xB_yO_{3-\delta}, \tag{1}$$

$$A_xA'_{x'}B_yB'_{y'}O_{3-\delta}, \tag{2}$$

and

$$A_xA'_{x'}A''_{x''}B_yB'_{y'}B''_{y''}O_{3-\delta}, \tag{3}$$

$$A_2BO_{4-\delta} \tag{4}$$

$$A_2B_2O_{5-\delta} \tag{5}$$

$$AO(ABO_{3-\delta})_n \tag{6}$$

$$AM_2Cu_3O_{7-\delta} \tag{7}$$

$$Bi_4V_{2(1-x)}Me_{2x}O_{11-3x}, \tag{8}$$

$$A'B'O_3 \tag{9}$$

where B' is W or Mo;

$$A_2B_2O_{7-\delta}, \tag{10}$$

and combinations thereof, wherein:

A is a cation of atoms having atomic numbers ranging from 57-71, inclusive, a cation of yttrium, cations of Groups 1 and 2 atoms, and combination thereof; B is a cation of a d-block transition metal; A' is a cation of Na or Li; M is a metal cation selected from cations of Group 2 atoms; Me is a metal cation of Cu, Bi, and Co atoms; x ranges from 0.01 to 1.00; and $\delta$ ranges from 0.05 to 0.30 are useful as sorbents of oxygen and catalysts of the reaction be-

tween a hydrocarbon and oxygen to form carbon monoxide and hydrogen. The compounds (1) - (10) may also function as active supports for binary metal oxides to enhance the oxygen sorption/desorption capacity of the composites. One group of composite materials comprise components (A) and (B), wherein component (A) is selected from compounds of general formulas (1) through (10), inclusive, and combinations thereof, and component (B) comprises a metal selected from rhodium (Rh), platinum (Pt), palladium (Pd), nickel (Ni) and silver (Ag), and combinations and alloys of these metals.

**Air** →

**N₂-rich
waste gas**

**O₂-rich
stream** ←

← **Purge gas**

**FIG. 3**

**Description**

This invention relates to novel chemical compounds and their use as oxygen sorbents.

Materials having the ability to sorb oxygen are useful in many industries, for example enrichment of oxygen from air or other multicomponent fluid. One useful class of crystalline materials is the so-called mixed ionic-electronic conductors (MIEC). These materials have exhibited enhanced sorption, as well as enhanced ionic and electronic conductivities, particularly their oxide-ion mobility and oxygen-($O_2$)-storing capacities. High-temperature non-stoichiometric defects (such as oxide-ion vacancies or interstitial oxygen sites) in the crystal-lattice allow the materials to temporarily sorb oxygen at high-temperature for oxygen enrichment of gas streams, as well as for catalytic transformations of other compounds using the oxygen that is temporarily sorbed.

Potential applications of MIEC materials have been documented: production of syngas and $H_2$; partial oxidation of light hydrocarbons; production of pure $O_2$ (with a view toward replacing, possibly, cryogenic distillation); production of $O_2$-enriched gas mixtures; various environment-related solutions; and solid-oxide fuel cells and sensors (*cf.*, for example, P.J. Gellings and H.J.M. Bouwmeester, *Solid State Electrochemistry,* CRC Press, Boca Raton, 1996; H. Ullmann, *Keramische Zeitschrift,* 53 (2001) 100-107; S.J. Skinner and J.A. Kilner, *materialstoday* (March 2003) 30-37. Specifically, Ion-Transport-Membrane (ITM) technologies for $O_2$ separation and syngas production are under quickly progressing development.

Technologies such as cyclic high-temperature sorption-desorption processes based on $O_2$ partial-pressure swings, have gained considerable interest. Cyclic $O_2$-recovery processes that utilize specific ceramic materials, such as perovskite-type oxides $ABO_3$ with A = La, Sr and B = Co, Fe as sorbent/catalyst having high-temperature non-stoichiometric defects are being developed. These processes are referred to as ceramic autothermal recovery (CAR) processes, to be discussed further herein. They consist of alternately passing air and another medium (or applying vacuum) through pellets or granules of the material in a fixed-bed configuration, with cycle times of the order of minutes or less. Oxygen retained in the solid material during the air contacting step is released by decrease in $O_2$-partial pressure via application of vacuum, steam, carbon dioxide, steam-carbon dioxide mixtures, flue-gas mixtures or other appropriate means, to generate an $O_2$-enriched stream, which is used as feed to other systems, into which CAR could be integrated, e.g., combustion processes.

Key advantages of CAR over Ion Transport Membrane (ITM) processes are ease of material fabrication, plant design and process execution using traditional unit operations. Preliminary estimates indicate significant economic benefits compared to the traditional cryogenic air separation, due to lower energy consumption. On the other hand, cryogenic air separation plants are well understood and, despite their high operating costs, industry momentum is geared toward designing these plants cost-effectively, and this leads to reduced engineering and design costs, and inherent safety built up over time.

One of the key technical issues and risks of the CAR process for $O_2$ enrichment relates to material development. Of the MIEC materials of interest, perovskites and perovskite-like materials have attracted attention in the past. The process-related crystal-structure oxide-ion, $O^{2-}$, deficiency can be exemplified by perovskite-type oxides, which originally referred to the mineral $CaTiO_3$. Today, "perovskite" denotes a series of oxygen-containing compounds with a unique general crystal structure, $ABO_3$, with high-temperature $O^{2-}$ vacancies, denoted by the symbol $\delta$, which obeys the general formula $ABO_{3-\delta}$. The "A"-site cations can be rare earth, alkaline earth, alkaline and other large cations such as $Pb^{2+}$, $Bi^{3+}$, or $Ce^{4+}$, and the "B"-site cations can be 3d, 4d, or 5d transition-metal cations. Multiple cation-type occupations of those two sites are possible. Framework sites "A" and "B" are dodecahedral and octahedral, respectively, *cf.*, L.G. Tejuca and J.L. Fierro, *Properties and Applications of Perovskite-type Oxides,* Marcel Dekker, New York, 1993.

A standard cubic high-temperature perovskite phase remains stable and reversible with regard to changes of $\delta$ within a certain range: The value $\delta$ could be as high as 0 to 1, depending on the cationic composition of the compound, but within the T and $pO_2$ range of the CAR process only a part of $\delta$, named as $\delta'$ is reversibly exchangable, as a rule $\delta' = 0.05 - 0.25$ (although higher values have been reported), at elevated temperature and low oxygen partial pressure, i.e., $\delta$ is a function of temperature and partial pressure of oxygen. On the other hand, perovskite stability is governed by cation radii of lattice metals in various valence states combined into a parameter "t" called "tolerance factor", *cf.*, Z. Shao, *et al., Sep. Purif. Technol.*, 25 (2001) 419-42. A perovskite structure can be formed only if t ranges from 0.75 - 1. These circumstances have set limits to the performance potential of perovskites in $O_2$-recovery and related processes. Tereoka *et al.* described the material $La_{1-x}Sr_xCo_{1-y}Fe_yO_{3-\delta}$ as a medium for oxide-ion permeation with excellent performance at high temperature (Y. Tereoka *et al., Chemistry Letters,* (1985) 1367-1370; 1743-1746). In this case, the $O_2$ permeation is driven by the $O_2$-partial-pressure difference between the two sides of the membrane, and it results from oxygen-ion transport through the vacant sites in the lattice structure. Significant efforts have been directed to the investigation of the fabrication and utilization of these materials as oxide ion transport membranes for gas separation and reaction. Mazanec, et al., (U.S. Pat. No. 4,933,054) were awarded a patent in this area in 1990. One recent study of $SrCo_{0.4}Fe_{0.6}O_{3-\delta}$ reported, however, a decrease in oxygen permeability through samples that were purposely made stronger by addition of up to 9 wt % $ZrO_2$, where the $Zr^{4+}$ cations replaced some of the B site cations.

Yang, *et al., Effect of the Size and Amount of ZrO$_2$ Addition on Properties of SrCo$_{0.4}$Fe$_{0.6}$O$_{3-\delta}$, AIChE Journal*, Vol. 49, Issue 9, pages 2374-2382 (2003).

Desorption of O$_2$ from La$_{1-x}$Sr$_x$CoO$_{3-\delta}$ was studied and reported by Nakamura *et al.* (*Chemistry Letters,* (1981) 1587-1581) in 1981. Later, Teraoka *et al.* (*Chemistry Letters,* (1985) 1367-1370) examined O$_2$ sorption properties of La$_{1-x}$Sr$_x$Co$_{1-y}$Fe$_y$O$_{3-\delta}$. They observed that considerable amount of O$_2$ was desorbed from this class of oxides as temperature was increased from 300°C to 1100°C, and was sorbed as temperature was decreased. Mizusaki *et al.* (*J. Solid State Chemistry,* 80 (1989) 102) measured the oxygen non-stoichiometry of the perovskite-type oxide La$_{1-x}$Sr$_x$CoO$_{3-\delta}$ as function of temperature, Sr content (x) and O$_2$-partial pressure. Lankhorst and Bouwmeester (*J. Electrochem. Soc.,* 144 (1997) 1268) measured the oxygen non-stoichiometry of La$_{0.8}$Sr$_{0.2}$Co$_{O3-\delta}$. Zeng and Lin (*Solid State Ionics,* 110 (1998) 209-221) investigated O$_2$-sorption and desorption rates of a La$_{0.2}$Sr$_{0.8}$CoO$_{3-\delta}$ sample subjected to sudden changes of O$_2$-partial pressure at constant temperatures. They found that this rate could be correlated to a linear-driving force of the deviation of oxygen-vacancy concentration in the bulk phase of the sample from its corresponding thermodynamically equilibrated one.

Processes using the O$_2$-sorption properties of perovskite-type oxides for gas separation and purification, are described in KoKai Patent No. Hei 5(1993)-4044, 1993; Chinese patent application by Yang, et al., Appl. No. 99 1 13004.9; and U.S. Pat. Nos. 6,059,858; 6,143,203; 6,379,586; 6,464,955; 6,772,501; 6,740,441; 6,641,626; 6,471,921; 6,541,159; 6,440,283; 6,146,549; 5,509,189 and 5,403,461 and U.S. Pub. Pat. Appl., US 2002/0179887 A1 (2002).

As mentioned, the ability of perovskite and perovskite-like materials to function as commercial sorbents presently has limits. Despite improvements in the art, the need remains for compositions, which take better advantage of the excellent O$_2$-Sorption and permeability properties of perovskites and perovskite-like materials, while exhibiting enhanced durability, so that the materials may be used commercially.

In accordance with the present invention compositions, composite materials, and methods of use are presented which reduce or overcome many of the problems of previously known materials.

Compositions of the invention are crystalline ceramic materials capable of forming a stable, reversible perovskite crystal phase at elevated temperature, and include certain perovskite compounds, perovskite-like compounds, and pyrochlores as set out below:

Some perovskites of the invention are those of general formula (1), (2), or (3):

$$ABO_{3-\delta}, \tag{1}$$

$$A_xA'_{x'}B_yB'_{y'}O_{3-\delta}, \tag{2}$$

and

$$A_xA'_{x'}A''_{x''}B_yB'_{y'}B''_{y''}O_{3-\delta}, \tag{3}$$

and combinations thereof, wherein:

A, A', and A'' are independently selected from ions of atoms having atomic number ranging from 57-71, inclusive, a cation of yttrium, ions of Group 1 atoms, ions of Group 2 atoms, and combinations of two or more, where Group 1 and Group 2 refer to the periodic table of elements;

B, B', and B'' are independently selected from d-block transition-metal ions selected from Cr, Mn,, Fe, Co, Ni, and Cu;

x, x', x'', y, y', and y'' are each real numbers ranging from 0 to 1.0;

x + x' +x'' = 0.8 - 1.0; y + y' + y'' = 1.0; and $\delta$ ranges from about 0.05 to about 1.0. with the provisos that:

(1) when a Co ion is present at a plurality of B sites, then at least some of the B' sites are occupied by Fe ions, and at least some of the B'' sites are occupied by Ni ions;

(2) when a Cu ion is presented at a plurality of B sites, then at least some of the B' and B'' sites are occupied by one or more of Mn ions, Cr ions and Fe ions; and

(3) when proviso (1) is true, then at least one other compound of general formula (1), (2), or (3) is present.

Other perovskite-like compounds of the invention are those of general formula (4), (5), (6), (7), (8), or (9):

$$A_2BO_{4-\delta} \tag{4}$$

$$A_2B_2O_{5-\delta} \tag{5}$$

$$AO(ABO_{3-\delta})_n \tag{6}$$

$$AM_2Cu_3O_{7-\delta} \tag{7}$$

$$Bi_4V_{2(1-x)}Me_{2x}O_{11-3x}, \tag{8}$$

$$A''B''O_3 \tag{9}$$

wherein:

A and $\delta$ are defined as above;
B is independently selected from d-block transition metal ions;
A" is an ion of Na or Li, and B" is an ion of W or Mo;
M is a metal cation selected from cations of Group 2 atoms of the periodic table of elements;
Me is a metal cation selected from cations of Cu, Bi, and Co atoms;
x is a real number ranging from 0 to 1.0; and
n ranges from 1 to about 10.

Pyrochlores useful in the invention are those of general formula (10):

$$A_2B_2O_{7-\delta} \tag{10}$$

wherein:

A, B and $\delta$ are as defined above for the perovskite-like compounds of general formulae (4), (5), (6), (7), (8), or (9).

One group of desirable compositions are compounds of any one of general formulae (1) to (10) inclusive combined with a binary metal oxide as defined herein. In certain formulations it has been found advantageous to combine these materials with composites, for example overlaying a perovskite, perovskite-like, or pyrochlore material with a binary metal oxide. It has been found that the binary metal oxides can exchange reversibly oxygen in the presence of the perovskite materials, and the oxygen sorbing ability of the composites increases compared with the situation of pure perovskite materials.
Another aspect of the invention are composite materials characterized by:

(A) one or more crystalline ceramic oxides selected from compounds of general formula (2); and

(B) one or more crystalline ceramic oxides selected from compounds of general formula (4), (5), (6), (7), (8), (9), or (10), and combinations thereof, wherein all variables are as defined above.

Yet another aspect of the invention are composite materials characterized by components (A) and (B), wherein component (A) is selected from crystalline ceramic materials capable of forming a stable, reversible perovskite crystal phase at elevated temperatures (T > 500°C) of a general formula selected from (1) to (10) above, and combinations thereof, and component (B) is a metal selected from rhodium (Rh), platinum (Pt), palladium (Pd), nickel (Ni) and silver (Ag), and combinations and alloys of these metals to form ceramic/metal composites named cermets. One group of composites of the invention are those wherein A is an ion of atoms having atomic number ranging from 57-71, inclusive; A' is an Sr ion; and B and B' (when present) are selected from Ni, Co and Fe ions. Another set of composites within the invention are those wherein component (A) comprises a crystalline ceramic oxide within general formula (7) $AM_2Cu_3O_{7-\delta}$ and component (B) is a metal selected from Rh, Pt, Pd, Ni, Ag and combinations thereof.

Compositions and composites of the invention may each be formed as structured particles having a particle size ranging from about 0.01 to about 100 microns in largest dimension, or range from about 0.1 to about 50 microns.

Compositions and composites of the invention, when used as oxygen separation media, may be supported on (or serve as supports for) an "active" matrix selected from porous inorganic materials that are stable at temperatures ranging from about 500 to about 1000°C. In this form the inventive compositions may be referred to as supported compositions, and the inventive composites may be referred to as supported composites, or secondary composites. "Active" - as that term is used when referring to support or matrix materials - means that even the supporting material acts in the oxygen sorption and transport. As mentioned earlier, binary metal oxide compounds within general formula $M'O_n$ may be supported by the composites of the invention. Compounds within the general formula $M'O_n$ referred to as "binary metal oxides", mean a single metal element that assumes different oxidation states within the oxygen partial pressure range of the CAR process, enabling the metal oxides to release oxygen at different partial pressures of oxygen in CAR processes. In the binary metal oxides, $M'O_n$, M' is a metal of the d block transition metals that changes its oxidation state. Metals may be Cu, Co, Ni, Bi, Pb, V, Mn, and Cr, the oxides of which release oxygen by changing their crystal phase or by their reduction up to the metal. In their pure states, the binary metal oxides do not form stable ceramic shapes because of crystal phase transformations. However, in combination with an active support or matrix oxide (perovskite materials within general formulas (1), (2), or (3), perovskite-like materials within general formulas (4), (5), (6), (7), (8), and (9), and pyrochlores within general formula (10)), stability of the binary metal oxides can be enhanced, while extending the oxygen sorption/desorption capacities of the matrix compositions. Other suitable active support materials include apatite compositions.

Compositions, composites, and supported versions of each may be shaped, structured articles of manufacture, having shape selected from beads, pellets, saddles, rings, pyramids, extrudates with any cross sectional shapes with or without holes, honey-combs with uniform channels and monoliths with random porosity and foam structure, and the like. The inorganic support may be a porous inorganic support comprising a plurality of pores, as further described herein.

Compositions and composites of the invention may be coated on one or more non-porous support materials to achieve an increase in performance, and enhancement of thermal and mechanical properties of the composition.

A second aspect of the invention are methods of separating a gas component from a mixture of gases by either of pressure swing adsorption, thermal swing absorption, or combination thereof, comprising contacting a gas mixture with a composition or composite of the invention. Methods of the invention include converting a light hydrocarbon (C5 or less) into hydrogen and carbon monoxide by contacting one or more hydrocarbons with a composition of the invention, including reactions of partial oxidation, steam reforming, auto-thermal reforming, and the like, in process modes selected from batch, semi-continuous, continuous or cyclic operations. The reactions may be carried out in well-known bed-type reaction vessels, where the bed of particles is fluidized, semi-fluidized, or non-fluidized.

Thus, the present invention provides for novel materials, their use and methods of use, specifically modified mixed ionic-electronic conductor (MIEC) materials (either alone or as composites with active oxygen exchange support materials) with enhanced performance in sorption, catalytic processes, and the like. The inventive compositions and composites owe their ionic and electronic conductivities, particularly their oxide-ion mobility and $O_2$-storing capacities, to high-temperature non-stoichiometric defects such as oxide-ion vacancies - or interstitial oxygen sites - in the crystal-lattice structure of the solids, and also on changed valence states of a selected series of transition metals, which lead to different oxides of one and the same metal. These materials will have strong potential for high-temperature processes that utilize the $O_2$-storing/releasing properties for purposes of the enrichment of $O_2$ in gas streams but also for multi-fold catalytic transformations of other compounds. The inventive compositions and composites may also be formed into chemically and mechanically robust ceramic materials such as sorbent and membrane materials with high $O_2$ capacities (in the case of sorbents) and high $O_2$ permeation fluxes (in the case of membranes). This enables the design of high-performance structured ceramics of regular or random shapes, allowing for high performance in $O_2$ enrichment and, at the same time, the ability to withstand the expected operating conditions in large scale plants, and be cost-effective in addition. The inventive composites may be utilized advantageously for high-temperature CAR-type PVSA and TSA processes (and also for other related applications) to produce substantially pure $O_2$, syngas and $H_2$ (at small and large scale), as well as $O_2$ and fuel in integrated process schemes, for example, so-called oxy-fuel processes and many other processes.

Novel materials that reversibly deliver $O_2$ in CAR processes and other methods of use are now described in further detail. Primary attention is paid to new compositions including oxides with or without binary metal oxides, and composites of two or more oxides with or without binary metal oxides, that act reversibly with high exchange rate and high capacity for $O_2$ over an $O_2$-Partial pressure region between 5 and 0.01 atmosphere. Beside these parameters, their thermodynamic and long-time mechanical stability under the conditions of commercial processes, with maintenance of both the desired crystal structure and secondary ceramic shape, specifically by considering thermal expansion coefficients as important material-specific parameters, are accounted for.

### I. Crystalline Ceramic Oxides: Perovskites, Perovskite-like, and Pyrochlore Oxides

The inventors herein have discovered that compositions of the invention of a general formula selected from (1) to (10), inclusive, and composites of the invention overcome some or all the limitations of previous compositions in enhancing oxygen permeability and oxygen trapping ability as well as chemical and thermal-mechanical stability.

As discussed previously, a standard cubic high-temperature (about 500 - 1000°C) perovskite phase remains stable and reversible with regard to changes of $\delta$ within $\delta' = 0.05 - 0.25$ at elevated temperature and low oxygen partial pressure. On the other hand, perovskite stability is governed by cation radii of lattice metals in various valence states combined into a parameter "t" called "tolerance factor", and a perovskite structure can only be formed if t ranges from 0.75 - 1. These circumstances have set limits to the performance potential of perovskites in $O_2$-recovery and related processes. Attempts to extend the limits of useful perovskites have failed, at least as far as oxygen permeability is concerned. For example, when a perovskite material was purposely made stronger by addition of $ZrO_2$, where the $Zr^{4+}$ cations replaced some of the B site cations, the material was stronger, but the oxygen permeability decreased. Yang, *et al., Effect of the Size and Amount of $ZrO_2$ Addition on Properties of $SrCO_{0.4}Fe_{0.6}O_{3-\delta}$ , AIChE Journal,* Vol. 49, Issue 9, pages 2374-2382 (2003).

As may be seen from the above general description of compositions and composites of the invention, the key to the effectiveness of the composites of the invention lies in the selection of the B site cations; in particular, it appears that the ability of Fe, Co, Ni, Cu, Cr and Mn cations to be present in more than one oxidation state in the crystal lattice at high temperatures allows, the compositions and composites of the invention to be particularly useful in temporarily sorbing oxygen, especially in certain unexpected combinations of perovskites, perovskite-like compounds, and pyrochlores with the metals Rh, Pt, Pd, Ni, and Ag. It is also theorized that the ionic radii of the selected A and B site cations in their various oxidation states, and the fluctuation between these states and radii, perhaps help in the generation of oxide ion vacancies in the crystal lattice of perovskites, perovskite-like compounds and pyrochlores useful in the composites of the invention. Furthermore, it is theorized that the presence of metals Rh, Pt, Pd, Ni, and Ag in close proximity to perovskite structures within the composites of the invention helps in surface effects.

The valency states of the various transition metals deemed useful in the compositions and composites of the invention, and the ionic radii of the most stable ion, are presented in Table 1, in accordance with R.D. Shannon, *Acta Cryst.,* A32 (1976) 751-767. The ionic and electronic conductivities of these compositions, particularly their oxide-ion mobility, and oxygen-storing capacities that are based on high-temperature non-stoichiometric defects such as oxide ion vacancies, or interstitial oxygen sites, in the crystal-lattice structures of these solids, makes composites of the invention particularly useful in oxygen separation.

Table 1.

| Valency States and Ionic Radii | | | |
|---|---|---|---|
| Atomic Number | Symbol | Possible Oxidation States | Ionic radii (pm)* |
| 24 | Cr | 2, 3*, 4, 5, 6 | 62 |
| 25 | Mn | 7, 6, 4, 3, 2* | 67 |
| 26 | Fe | 2, 3* | 55 |
| 27 | Co | 2*, 3 | 65 |
| 28 | Ni | 2*, 3 | 69 |
| 29 | Cu | 2*, 1 | 73 |

* Most stable cation

Perovskite crystalline ceramic oxides of the invention may be those wherein A is an ion of atoms having atomic number ranging from 57-71, inclusive; A' is an Sr ion; and B and B' are selected from Ni, Co and Fe ions. Perovskite crystalline ceramic oxides of the invention may be solid solutions of compounds having the formula $La_xSr_{x'}Ni_y$-$Co_{y'}Fe_{y''}O_{3-\delta}$, wherein x + x' ranges from about 0.8 to about 1.0; y + y' + y'' ranges from about 1.0 to about 1.1, and one or more compounds within the general formulas $ABO_{3-\delta}$ and $A_xA'_{x'}B_yB'_{y'}O_{3-\delta}$, particularly those compositions wherein 0.1<x<1, 0.1<x'<1, 0.0<y<1.0, 0.0<y'<1.0 and 0.0<y''<1.0. Some specific perovskite, perovskite-like, and pyrochlore crystalline ceramic oxides of the invention include those in Table 2.

Table 2.

| Crystalline Ceramic Oxides | |
|---|---|
| Perovskites: | |
| $A_xA'_{x'}B_yB'_{y'}O_{3-\delta}$<br>$La_{0.6}Sr_{0.4}CO_{0.8}Fe_{0.2}O_{3-\delta}$,<br>$Sr_{0.9}Ce_{0.1}Fe_{0.8}CO_{0.2}O_{3-\delta}$,<br>$La_{0.2}Sr_{0.8}CO_{0.6}Fe_{0.4}O_{3-\delta}$,<br>$Ba_{0.5}Sr_{0.5}Co_{0.8}Fe_{0.2}O_{3-\delta}$<br>$Ca_{0.5}Sr_{0.5}Mn_{0.8}Fe_{0.2}O_{3-\delta}$<br>$Ca_{0.45}Sr_{0.45}Mn_{0.8}Fe_{0.2}0_{3-\delta}$<br>$La_{0.8}Sr_{0.2}Ni_{0.4}CO_{0.4}Fe_{0.2}O_{3-\delta}$<br>$La_{0.6}Sr_{0.4}Cr_{0.2}Fe_{0.8}O_{3-\delta}$ , | (2) |
| Perovskite-related: | |
| $A_2BO_{4-\delta}$<br>$La_2CoO_{4-\delta}$<br>$La_2MnO_{4-\delta}$<br>$La_2FeO_{4-\delta}$<br>$Sr_2CuO_{4-\delta}$<br>$Sr_2MnO_{4-\delta}$ | (4) |
| $A_2B_2O_{5-\delta}$<br>$La_2Co_2O_{5-\delta}$<br>$La_2Mn_2O_{5-\delta}$<br>$Sr_2Cr_2O_{5-\delta}$<br>$Ce_2Mn_2O_{5-\delta}$ | (5) |
| $AO(AB0_{3-\delta})_n$<br>$LaO(LaCuO_{3-\delta})_5$<br>$SrO(LaCrO_{3-\delta})_6$<br>$GdO(SrFeO_{3-\delta})_5$<br>$CeO(LaNiO_{3-\delta})_6$<br>$YO(YMnO_{3-\delta})_n$<br>$CeO(CeMnO_{3-\delta})_n$ | (6) |
| $AM_2Cu_3O_{7-\delta}$<br>$KBa_2Cu_3O_{7-\delta}$<br>$NaBa_2Cu_3O_{7-\delta}$<br>$LaBa_2Cu_3O_{7-\delta}$<br>$MgBa_2Cu_3O_{7-\delta}$<br>$SrBa_2Cu_3O_{7-\delta}$<br>$Y_{0.5}La_{0.5}BaCaCu_3O_{7-\delta}$<br>$Y_{0.8}La_{0.2}Ba_{0.8}Sri_{1.2}Cu_3O_{7-\delta}$<br>$Y_{0.7}La_{0.3}Ba_{0.8}Sri_{1.2}Cu_3O_{7-\delta}$<br>$Y_{0.9}La_{0.1}Ba_{0.6}Ca_{0.6}Sr_{0.8}Cu_3O_{7-\delta}$ | (7) |
| $Bi_4V_{2(1-x)}Me_{2x}O_{11-3x}$,<br>$Bi_4VCuO_{9.5}$<br>$Bi_4V_{0.6}Co_{1.4}O_{8.9}$<br>$Bi_4V_{1.4}Bi_{0.6}O_{10.1}$<br>$Bi_4V_{1.6}Cu_{0.4}O_{10.4}$ | (8) |
| $A''B''O_3$<br>$LaFeO_3$<br>$SrCoO_3$<br>$SrFeO_3$ | (9) |

Table 2.   (continued)

| Crystalline Ceramic Oxides | |
| --- | --- |
| Perovskites: | |
| Perovskite-related: | |
| Pyrochlores<br>$A_2B_2O_{7-\delta}$<br>$Mg_2Fe_2O_{7-\delta}$<br>$Mg_2Co_2O_{7-\delta}$<br>$Sr_2Mo_2O_{7-\delta}$ | (10) |

## II. Binary Metal Oxides

Compounds of general formula $M'O_n$ are termed "binary metal oxides", where M' is a metal that changes its oxidation state, and n is a real number ranging from 0.5 to about 3. M is a single metal ion that assumes different oxidation states within the oxygen partial pressure range of the CAR process, enabling the metal oxide to release oxygen at different partial pressures of oxygen in CAR processes. Metals may be selected from Cu, Co, Ni, Bi, Pb, V, Mn, and Cr, the oxides of which release oxygen by changing their crystal phase or by their reduction up to the metal. In their pure states, the binary metal oxides do not form stable ceramic shapes because of crystal phase transformations. However, in combination with an active support or matrix oxide (perovskite materials of general formula (1), (2), or (3), perovskite-like materials of general formula (4), (5), (6), (7), (8), or (9), and pyrochlores of general formula (10)), stability of the binary metal oxides can be enhanced, while extending the oxygen sorption/desorption capacities of the perovskites.

A desired set of compositions of the invention are those wherein a perovskite compound, a perovskite-like compound, or a pyrochlore serves as an active matrix for one or more binary metal oxides. This combination has been shown to increase the extent of oxygen exchange and working capacity of the composite material. Some of these binary oxides are known as catalytic active materials. The concentration of the binary oxide in the composite may range from about 1 to about 50 wt %, or from about 2 to about 20 wt %. Some binary metal oxides useful in the invention are listed in Table 3.

Table 3.

Metals of varying valency states and their oxides and related phase transformations

$CuO/Cu_2O/Cu$

$PbO_2/PbO/Pb$

$Bi_2O_3/Bi$

$NiO/Ni$

$CoO/Co$

## III. Cuprate Compounds with Perovskite and/or Perovskite-related Structures

One group of compounds of the invention include compositions within general formula (7), particularly $YBa_2Cu_3O_{7-\delta}$ and doped versions thereof, such as $Y_{1-x}La_xBa_{2-y}Sr_yCu_3O_{7-\delta}$ and $Y_{1-x}La_xBa_{2-y}Ca_yCu_3O_{7-\delta}$, wherein x ranges from 0 to about 1, and y ranges from about 0.5 to about 1.5. The inventive materials within general formula (7) comprise a selection of cuprates with perovskite and/or perovskite-related structures. They are specifically Rare Earth (RE)-cuprates with perovskite and/or perovskite-related structures, *e.g.*, $(RE)M_2Cu_3O_{7-\delta}$, with a molar ratio RE-M-Cu = 1:2:3, specifically, $YBa_2Cu_3O_{7-\delta}$, with Y-Ba-Cu = 1:2:3, wherein partial substitution by appropriate dopants may be of their basic metal components RE and barium, Ba, is envisioned, in addition. One group of dopants for the purposes of the invention includes lanthanide metal dopants such as lanthanum, La, praseodymium, Pr, gadolinium, Gd, and holmium, Ho.

The structure of the cuprates with perovskite and/or perovskite-related materials contains in particular perovskite-like structural units as mentioned above. Therein are systematic oxygen-atom vacancies in the unit cell compared to a stack of simple perovskite unit cells. These vacancies occur between adjacent copper atoms in the $CuO_3$ chains along the crystallographic c axis. The vacancies are in the RE, specifically yttrium-atom plane. There are also additional vacancies between Cu atoms along the crystallographic a axis in the Cu-and-O planes that lie between the planes of Ba atoms. The stoichiometry seems to be odd, *viz.,* $(RE)M_2Cu_3O_{7-\delta}$, which results from additional oxygen vacancies (defect structure), at certain sites such that it holds $0 < \delta < 1$ For $YBa_2Cu_3O_{7-\delta}$, usually $\delta = 0.19$, within the temperature region of superconductivity, *i.e.,* $(100 \pm 20)$ K. It is well known, however, that $\delta$ is a function of temperature. The defect structure gets increasingly pronounced with temperature, and since utilization of the materials of this invention would take place at high temperature, the assessed utilization is based on the reasonable assumption of $0.2 < \delta' < 0.8$. Additionally, the parameter $\delta$ is assumed to depend on $O_2$ partial pressure as well.

For the specific purpose of this invention, the inventive materials within the general formula $(RE)M_2Cu_3O_{7-\delta}$, have been shown in testing to have $O_2$ "working" sorption capacities larger by factors ranging from about 3 to about 10 times higher for CAR, compared to the currently known materials, at given constant $O_2$ pressure ratios. The following related properties of a $(RE)M_2Cu_3O_{7-\delta}$, *viz.*, $YBa_2Cu_3O_{7-\delta}$, have been assessed:

-- The working sorption capacity of $YBa_2Cu_3O_{7-\delta}$ in CAR processes named, exceeds that of perovskite $La_{0.2}Sr_{0.8}Co_{0.6}Fe_{0.4}O_{3-\delta}$, by a factor of ca. 4 (at the time being, the assessment method does not allow for conclusions regarding the $O_2$ isotherm shape, *i.e.,* for "working" capacities over certain $O_2$-Pressure ranges). However, reasons exist to assume that the "working" capacity would be increased by a factor of ca. 3, depending on process-temperature regime;

-- By utilizing materials of the formula YBa2Cu3O7-$\delta$, it has been shown that we can decrease significantly the temperature at which a CAR process is executed, i.e., currently at ca. 850 °C. A process-temperature ranging from about 500 to about 650°C is now possible. This eases tremendously issues of heat management, with which CAR technology was heretofore weighed down, in general;

-- The existence of high-temperature order-disorder transitions in all compositions of the invention, but in particular compositions within the general formula $(RE)M_2Cu_3O_{7-\delta}$, are of further advantage to optimize heat-management issues in CAR processes;

-- Strong reasons exist to conclude that $O_2$ transport rate in $(RE)M_2Cu_3O_{7-\delta}$ structures are distinctly higher than in $La_{0.2}Sr_{0.8}Co_{0.6}Fe_{0.4}O_{3-\delta}$ perovskite structures utilizable for CAR.

Doping the specific material $YBa_2Cu_3O_{7-\delta}$ with other cations of the types RE and M, for example, those of lanthanum and calcium, strontium, respectively, increases significantly the chemical stability of it but also the mechanical strengths of the resulting specimens. The latter purpose could also be achieved by incorporating titanium cation.

### IV. Composites

One group of composites of the invention are composites of compounds within general formula (2) with one or more compounds within general formulas (4) through (10), inclusive. Perovskites useful in this group of composites of the invention include those wherein A is an ion of atoms having atomic number ranging from 57-71, inclusive; A' is an Sr ion; and B and B' are selected from Ni, Co and Fe ions. Perovskite oxides useful in the invention within general formula (2) $A_xA'_{x'}B_yB'_{y'}O_{3-\delta}$ are those wherein $0.5<x<1$, $0.1<x'<0.5$, $0.2<y<0.8$, and $0.2<y'<0.6$.

When more than one crystalline ceramic oxide is present in a composition of the invention, the differing crystalline ceramic oxides may be present in a variety of formats, including, but not limited to, solid solutions, layered compositions, randomly mixed compositions, one crystalline ceramic oxide of the invention overlaid on (or dispersed in) a second crystalline ceramic oxide of the invention, and the like. For example, the two or more perovskite-type crystalline ceramic oxides may be present as intergrown layers, or as discrete layers. As examples of these: $La_{0.2}Sr_{0.8}Co_{0.6}Fe_{0.4}O_{3-\delta}$ in alternating or intergrown layers with $Sr_{0.9}Ce_{0.1}Fe_{0.8}Co_{0.2}O_{3-\delta}$; $La_{0.6}Sr_{0.4}Co_{0.8}Fe_{0.2}O_{3-\delta}$ in alternating or intergrown layers with $La_{0.8}Sr_{0.2}Ni_{0.4}Co_{0.4}Fe_{0.2}O_{3-\delta}$; $La_{0.8}Sr_{0.2}Ni_{0.4}Co_{0.4}Fe_{0.2}O_{3-\delta}$ in alternating or intergrown layers with $La_{0.2}Sro_{0.8}Co_{0.6}Fe_{0.4}O_{3-\delta}$; $La_2CoO_{4-\delta}$ in alternating or intergrown layers with $Gd_2Ti_2O_{7-\delta}$; $YBa_2Cu_3O_{7-\delta}$ in alternating or intergrown layers with $NaWO_3$; $YBa_2Cu_3O_{7-\delta}$ in alternating or intergrown layers with $Gd_2Ti_2O_{7-\delta}$. Further, perovskites of general formula (2) may be present with one or more perovskite-related compounds of a general formula selected from (4) - (9) above and pyrochlores of general formula (10) in a variety of formats, including, but not limited to, solid solutions, layered compositions, randomly mixed compositions, and the like. For example, a perovskite may be present with a perovskite-related compound as intergrown layers, or as discrete layers. As examples of these: $La_{0.6}Sr_{0.4}Co_{0.8}Fe_{0.2}O_{3-\delta}$ in alternating or intergrown layers with $La_2CoO_{4-\delta}$; $La_{0.6}Sr_{0.4}Co_{0.8}Fe_{0.2}O_{3-\delta}$ in alternating or intergrown layers with $Mg_2Fe_2O_{7-\delta}$; $Sr_{0.9}Ce_{0.1}Fe_{0.8}Co_{0.2}O_{3-\delta}$ in alternating or intergrown layers with $Sr_2Mo_2O_{7-\delta}$. Multiple layers are possible, with alternating layers of two or more of the inventive crystalline ceramic oxides. These compositions of the invention may comprise alternating layers of crystalline ceramic oxides of the invention. In the case of a binary metal oxide in combination with a perovskite of general formula (1), (2), or (3), or with perovskite-like compounds of a general formula selected from (4) to (9), or pyrochlores of general formula (10), one desirable set of compositions comprises a binary metal oxide mixed with a perovskite matrix to form a composite with uniform distribution of the minor (binary metal oxide) component in the major perovskite oxide (matrix). Another desired set of composition of the invention are those wherein a perovskite-type compound is overlaid by a binary metal oxide. Such arrangements allow for (i) buffering thermal-mechanical properties, (ii) increasing the surface-reaction rate by enhancing the accessible surface and the influence of grain-boundary region effects, and (iii) synergistic effects for increasing the "working capacity" of the materials, as discussed below.

Another group of composites of the invention may generally be categorized as combinations of components (A) and (B), wherein component (A) is selected from crystalline ceramic materials capable of forming a stable, reversible perovskite crystal phase at elevated temperatures (T > 500°C), and combinations thereof, and component (B) is a metal selected from rhodium (Rh), platinum (Pt), palladium (Pd), nickel (Ni) and silver (Ag), and combinations and alloys of these metals. Perovskites of a general formula selected from (1) - (3), perovskite-like compounds of a general formula selected from (4) - (9) and pyrochlores of general formula (10) may be present with one or more metals selected from Rh, Pt, Pd, Ni, Ag and combinations and alloys thereof in a variety of formats, including, but not limited to, solid solutions, layered compositions, randomly mixed compositions, and the like. For example, a perovskite may be present with a metal as intergrown layers, as discrete layers, or as the metal deposited on the perovskite by any known deposition means, such as chemical vapor deposition, physical vapor deposition, plasma-enhanced chemical vapor deposition, various sputtering procedures, electrochemical deposition, and the like. As examples of these:

platinum electrochemically deposited on $Y_{0.5}La_{0.5}BaCaCu_3O_{7-\delta}$;

platinum sputter deposited on $Y_{0.8}La_{0.2}Ba_{0.8}Sr_{1.2}Cu_3O_{7-\delta}$;

rhodium chemical vaspor deposited on $Mg_2Fe_2O_{7-\delta}$;

90%platinum/10%rhodium alloy electrochemically deposited on $La_{0.6}Sr_{0.4}Co_{0.8}Fe_{0.2}O_{3-\delta}$,

and the like. Multiple layers are possible, with alternating layers of two or more crystalline ceramic oxides with metals. Such arrangements allow for (i) buffering thermal-mechanical properties, (ii) increasing the surface-reaction rate by enhancing the accessible surface and the influence of grain-boundary region effects, and (iii) synergistic effects for increasing the "working capacity" of the materials. Dual phases of a crystalline ceramic oxide with one or more metal phases comprise another embodiment. Composites of the invention comprising components (A) and (B) may be formed as particles having a particle size ranging from about 0.01 to about 100 microns in largest dimension, or ranging from about 0.1 to about 50 microns. The particles may be shaped articles of manufacture, having shape selected from beads, pellets, saddles, rings, pyramids, cubes, extrudates with any cross sectional shapes with or without holes, honey-combs with uniform channels and monoliths with random porosity and foam structure, and the like.

The ratio of component (A) to component (B) in the final composite will of course depend on the end use, including the physical, chemical, and thermal environment the composite is exposed to, and the cycling of temperature and/or pressure that is expected to occur in various processes. Generally speaking, the weight ratio A:B may range from about 100:1 to about 1:100, or range from about 10:1 to about 1:10. A particular advantage of composites of the invention is the ability to modify the composition within each A and each B component, as well as the ratio A:B and physical form of each of A and B, to meet demands imposed by the end use. There may also be environmental reasons for selecting a particular A or B component, such as disposal constraints.

The composites of the invention may be supported on an "active" support selected from porous inorganic materials that are stable at temperatures ranging from about 500 to about 1000°C. In this form the inventive composites may be referred to as supported composites, or "secondary" composites, and these materials are particularly well-suited for high-temperature CAR-type processes for $O_2$ enrichment. Recall that primary compositional changes/doping of basic perovskite-type materials to improve their properties with regard to oxygen exchange have reached their limits. As used herein, the term "secondary composite" means mechanical combinations on a macro scale of two or more solid materials, one of which is itself a composite (a primary composite of components (A) and (B) as discussed herein), resulting in compositions with specific goal-oriented macroscopic properties. The phenomenon of building up/using secondary composites allows for significant unexpected (i) additional $O_2$-exchange capacity; (ii) improved thermo-chemical properties; (iii) appropriate changes in surface-reaction rates; and (iv) improved ceramic-material processing.

Examples of secondary composites of the invention include compositions where the "core" $O_2$-exchange material and the matrix (support) material are both active with regard to $O_2$-exchange. For example, secondary composites of this invention include one or more primary composites of the invention combined with an oxygen-exchange active matrix, which may be an oxide such as another perovskite that is slightly active, but contributes desirable mechanical and thermal properties to the composite. Composites of the invention optionally include a stabilizing component. It is anticipated that for most composites of the invention an appropriate binder will have to be utilized.

The stabilizing component functions to maintain the ability of the composition to undergo repeated cyclic changes in its crystal structure as temperature, pressure, or both are cycled. Suitable stabilizers are rare earth (lanthanides series) elements and their oxides, such as erbium and erbium oxide.

Binders function to maintain the intended physical shape of the composites of the invention under the constraints of the conditions of use. These constraints include chemical, electrical, and mechanical, and suitable binders are materials that substantially match the chemical, electrical, mechanical, and thermo-mechanical properties of the crystalline ceramic oxides and active support materials. In particular for non-membrane CAR extrudates to be used under pressure-swing conditions, the binder should allow composites of the invention to achieve a crush strength of at least about 3 kg/cm$^2$, or at least about 5 kg/cm$^2$, as tested by specific techniques and criteria the particular features of which depend greatly on both the shape and geometry of the particles investigated. Specifically, "buffering" of the thermal-expansion coefficient at O$^-$ deficiency conditions (for crystals) allows for maximum $\Delta\delta$ to be utilized by substantially reducing or eliminating the thermo-mechanical-stress gradient across the CAR-type macroscopic particle. The mechanical strength of composites of the invention under operating conditions may be improved, for example, by choosing appropriate supports, inert fillers, fibers and the like. Suitable binders may or may not be chemically active, and include metal oxides that do not undergo significant change in oxidation state, examples of which include the various aluminas, silicas, titanias and zirconia. These materials are well known in the ceramics art.

Active supports useful in the invention include perovskite-like compounds within general formulas (1), (2), and (3), perovskite-like compounds within general formulas (4), (5), (6), (7), (8), and (9) and pyrochlores within general formula (10), and combinations thereof. The active support may have a particle size (largest dimension) ranging from about 1 to about 10,000 microns, or range from about 10 to about 1,000 microns. When a binary metal oxide is present with a primary composite of the invention, the binary metal oxide may overlay the primary composite, and the binary metal oxide may have a crystallite size ranging from about 0.1 to about 0.5 microns. Secondary composites of the invention may be shaped articles of manufacture, having shape selected from beads, rings, pyramids, extrudates with any cross sectional shapes with or without holes, honey-combs with uniform channels and monoliths with random porosity and foam structure, and the like.

As with the primary composites of the invention having two or more crystalline ceramic oxides present, secondary composites of the invention may be comprised of alternating and densely packed thin layers of oxygen-exchange active materials. Such arrangements provide for an opportunity to (i) buffer thermal-mechanical properties, (ii) increase the surface-reaction rate by enhancing the accessible surface, and also the influence of grain-boundary region effects, (iii) provide for synergistic effects for increasing the "working capacity" of the material.

Intimately arranged physical mixtures of crystallographically incompatible structures also have utility as dual-compounded composite materials of the invention. For example, one or more primary composites of the invention may be physically dry mixed with a second primary composite of the invention, or alternatively with an active matrix material of the type mentioned herein, with optional binder and stabilizer materials.

## V. Working Capacity

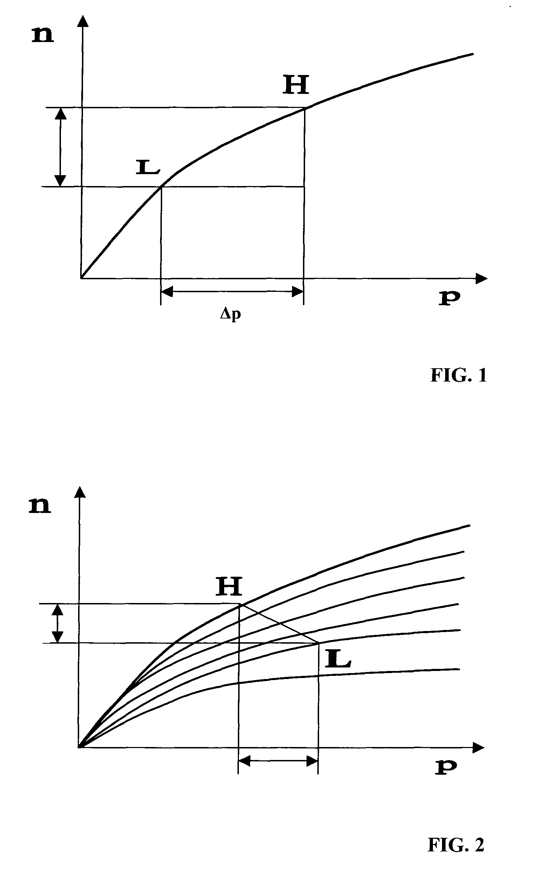

The meaning of the process parameter "working capacity" follows from FIGS. 1 and 2 that illustrate by sorption-isotherm schemes the sorption-process principles TSA (Thermal Swing Adsorption) and PSA (Pressure Swing Adsorption), respectively. A CAR process could be thought to be executed at conditions limited by these two principles. FIG. 1 illustrates graphically a pressure swing adsorption (PSA) scheme. (A similar figure would express a vacuum swing adsorption (VSA) scheme, which those of skill in the art will recognize is another method useful in practicing the invention.) In a PSA scheme, adsorption of the desired species (typically $O_2$) by pressure build-up at constant temperature leads to point H. Desorption using either pressure decrease (or vacuum) or partial pressure decrease in the desired species (using a replacement or sweep gas) at constant temperature leads the system to point L. The resulting difference is sorption uptake as shown at the ordinate is $\Delta n$ over the difference in (partial) pressure $\Delta p$. The difference $\Delta n$ represents the so-called "working capacity" (or desorbable amount of target species over a defined oxygen partial pressure range). This cycle is typically repeated one or a plurality of times. FIG. 2 illustrates graphically a temperature swing adsorption (TSA) scheme. Adsorption of the desired species (typically $O_2$) by pressure build-up at constant temperature $T_1$ leads to point H. Desorption using temperature increase, e.g., towards T5 with (or without) some pressure increase, leads the system to point L. Desorption may be supported by purge in conjunction with temperature increase using a fluid species that is less strongly sorbed than the target species. The resulting working capacity of the sorbent material is illustrated as the desorbed amount of target species, $\Delta n$. This cycle is typically repeated one or a plurality of times.

## VI. Methods of Making Compositions and Composites

The principal methods of making of perovskites and perovskite-related compounds such as of materials of this invention comprises well-known state-of-the-art procedures. These procedures are comprehensively characterized in a series of textbooks and review articles, for example in the above-quoted books by L.G. Tejuca and J.L. Fierro, *Properties and Applications of Perovskite-type Oxides,* Marcel Dekker, New York, 1993, therein, specifically Chapter 1: *Preparation of Bulk and Supported Perovskites* by J. Twu and P.K. Gallagher, and by P.J. Gellings and H.J.M. Bouwmeester, *Solid State Electrochemistry,* CRC Press, Boca Raton, 1996. As described, a series of basic knowledge areas and procedures are well-known, specifically as to the preparation of starting solutions and precipitation of their reaction products/ingredients, the thermal treatment of products, *viz.,* combustion, freeze-drying and plasma-spray-drying, solid-state reactions and gas-phase preparations and reactions. Multiple variations have been described in the periodic literature.

Preparation methods as used in this invention serve to arrive at specific compositions that are unexpectedly useful for the production of oxygen and oxygen-enriched gases by the CAR-type processes referred to. Thus, the general ways towards several basic classes of those compositions are well-known in principle and have to be modified only to meet the chemical but also physical demands for novel application-specific compositions. Related general descriptions are as follows.

Compositions and composites of the invention may be made and characterized using standard ceramic and metal deposition processing steps and equipment. For example, to prepare the material $La_{0.6}Sr_{0.4}Co_{0.8}Fe_{0.2}O_{3-\delta}$, one might start with the rare earth oxides, the earth alkaline carbonates and metal oxides required. Stoichiometric amounts of these starting compounds, according to the desired end composition, are intensively mixed and, for example, shaped into tablets to achieve an appropriate mutual contact behavior between the various chemical components. These tablets are then heated to temperatures higher than 1000 or 1200 °C, as a rule. Desired phase formation such as that of a perovskite in the case considered is controlled by an XRD method. If phase formation is rendered incomplete, the procedure has to be repeated. Upon completion of this process, the tablets are being milled using, for example, a zirconia milling vessel with zirconia milling spheres as long as a desired particle size had not been reached. Subsequent ceramic processing such as pressing, granulating and/or extruding with repeated sintering of the thus obtained "green" product leads to mechanically stable macroscopic particles of desired size. Especially for preparation of $YBa_2Cu_3O_{7-\delta}$ or doped products the preparation requirements regarding to phase formation are not as high as for the preparation of the related superconding materials since utilization of those perovskite-type materials for the purposes of this invention has nothing to do with the property of superconduction..

If a layered structure is desired, such as a binary metal oxide layer overlaying a perovskite matrix, these steps would be repeated with stoichiometric amounts of the desired binary metal oxide being mixed with the crystalline ceramic oxide from the first procedure. To make a composite of $La_{0.6}Sr_{0.4}CO_{0.8}Fe_{0.2}O_{3-\delta}$ and $La_2CoO_{4-\delta}$, one might start with technical grade samples of each required rare earth oxide and metal oxide or carbonates as described above. Stoichiometric amounts of each oxide required to produce $La_{0.6}Sr_{0.4}Co_{0.8}Fe_{0.2}O_{3-\delta}$ are well mixed using an agate and pestle. In a separate agate and pestle are mixed stoichiometric amounts of each oxide required to produce $La_2CoO_{4-\delta}$. The separate mixtures would then be mixed or layered as desired to form a "green" composite, and then fired at temperature usually higher than 1000 °C. The fired composite is then milled using, for example, a zirconia milling vessel with zirconia milling spheres as long as a desired particle size had not been reached. Then it is processed into the desired shapes by pressing, granulation or extrusion. Repeated sintering of the thus obtained "green" product leads to mechanically stable macroscopic particles of desired size.

To make a composite of $La_{0.6}Sr_{0.4}Co_{0.8}Fe_{0.2}O_{3-\delta}$ and a metal such as Ag, for example, or another one, one might start with technical grade samples of each required rare earth oxide and metal oxide or carbonates as described above, in stoichiometric amounts required to make the perovskite. Stoichiometric amounts of these starting compounds, according to the desired end composition, are intensively mixed and, for example, shaped into tablets to achieve an appropriate mutual contact behavior between the various chemical components. These tablets are then heated to temperatures higher than 1000 °C, as a rule. Desired phase formation such as that of a perovskite in the case considered is controlled by an XRD method. If phase formation is rendered incomplete, the procedure has to be repeated. Upon completion of this process, the tablets are being milled using, for example, a zirconia milling vessel with zirconia milling spheres as long as a desired particle size had not been reached. Subsequent ceramic processing such as pressing, granulating and/or extruding with repeated sintering of the thus obtained "green" product leads to mechanically stable macroscopic particles of desired size. The metal component could then deposited using physical or chemical vapor deposition, sputtering, electro-deposition, or like methods. It could also be admixed to the milled product upfront its ceramic processing and final sintering.

Chemically modified basic perovskite-type structures specifically such as of the cuprates with genuine perovskite or perovskite-related structural-type materials are straightforwardly obtained by admixing the starting material types such as oxides or carbonates of appropriate modifying alkaline-earth and three-valent metals to the synthesis batches of the basic parental materials to synthesize and process them in accordance with state-of-the-art recipes and procedures, respectively. This way, the inventive materials within the general formula $(RE)M_2Cu_3O_{7-\delta}$ can be made in analogy to a known cuprate with perovskite structure, *viz.,* $YBa_2Cu_3O_{7-\delta}$.

The structure of the individual powders and the final shaped articles may be studied using XRD employing a diffractometer such as that known under the trade designation D/Max-RB, available from Rigaku. Oxygen temperature-programmed desorption equipment is readily available. A heating rate of 10°C/min is typical. Oxygen permeation of membrane materials may be studied using known gas chromatography (GC) techniques. For example, a disk of the sintered material may be sealed in the end of an alumina tube, one side of the disk exposed to air, the other exposed to flowing helium. The outlet gas (He + $O_2$) is connected to the GC, for example a GC available from Hewlett-Packard known under the trade designation HP5890A. The GC is calibrated frequently using standard gases. The $O_2$ permeation flux ($J_{O2}$) may be calculated from known equations, such as the following:

$$J_{O2} = S/S° \times P° \times F/S_m,$$

where S is the oxygen area of the outlet gas, S° the oxygen area of the standard gas, P° the percentage of $O_2$ in the standard gas, F the outlet gas flow rate and $S_m$ the effective inner surface area of the membrane material.

## VII. Physical/physico-chemical Properties

Specific macroscopic size and system properties of compositions and composites of the invention of physical/physico-chemical nature that have an unexpected strong (positive) influence on enhanced $O_2$-exchange capacity, including improved thermo-chemical properties and accelerated surface-reaction rate are as follows:

(1) increase in "working capacity" along the $O_2$-Sorption isotherm (by appropriate change of its slope) via mixing effects with additional synergies (for example, enhancement of surface reaction) and by combining $O_2$-exchange active support materials into composites with crystalline ceramic oxides of the invention, which show differences in their active $O_2$-partial-pressure regions (select active support materials having high O⁻ capacity and optionally a linear sorption isotherm in order to ensure an increased $\Delta O_2$ loading, and its utilization under CAR-operating conditions);

(2) doping of the compositions and composites with all the possible variations in decoding A, B, A', A'', B', and B'', for several examples, or other materials to vary either the surface-exchange rate for $O_2$ or the rate of chemical oxide-ion diffusion to allow for a process regime along "non-equilibrium" isotherms, and increasing, thus, the working capacity, even if the total $O_2$ capacity remains unchanged/ comparatively low. Particularly, this could be achieved by decreasing the surface reaction rate at constant high chemical diffusivity (in the crystalline bulk of the exchange-active material);

(3) creating an additional regular macropore-channel system in secondary single-component and/or composite particles, such as extrudates, pellets, and the like, (*cf.,* W. Geipel and HJ. Ullrich, *Füllkörper-Taschenbuch,* Vulkan Verlag, Essen, 1991; and R.J. Wijngaarden, A. Kronberg, K.R. Westerterp, *Industrial Catalysis,* Wiley-VCh, Weinheim, 1998) and avoiding formation of mesoporosity with Knudsen-type transport by utilizing auxiliary pore-forming materials, for example, of organic character, in the making of secondary-material shapes that leads to a stochastic macroporosity only. Organic components of sufficient large size, such as naphthalene and/or naphthalene-based compounds, which consist of carbon and hydrogen only, to be burned off completely without strong side reactions, are desired for this purpose. However, concentration of pore-creating additives has to be balanced with regard to efficient removal of $CO_2$ formed, which could be detrimental to specific perovskite-type materials;

(4) improving the macro-kinetics of CAR processes by utilizing shape effects in secondary single-component material and/or composite particles (combining these with enhancement factors that stem from the additional regular macropore-channel system.);

(5) create "dispersion effects" on external surfaces of crystalline ceramic oxides or composite particles to enhance the surface-exchange rate;

(6) select crystalline ceramic oxide crystallite size distributions with their maxima shifted toward lower or higher crystal sizes, depending on typical rate processes that have to be identified and characterized for finding composition-specific optima); and

(7) utilize tribochemical and acid-treatment methods to activate external surface-area regions of crystalline ceramic oxides and composites including same for enhancing surface reaction by minimizing the surface barrier.

The particle size for any particular composite of the invention (primary and secondary) may vary over a large particle size distribution or a narrow particle size distribution, expressed in terms of Gaussian distribution curves.

The porous structure may be formed from a green composition comprising additives useful in forming pores in the porous inorganic material and useful to control pore structure of the pores, such as water, organic solvents, celluloses, polymers, synthetic and naturally formed fibers, starches, metal oxides, and the like, and combinations thereof. Additives may be selected from water, celluloses, about 0.1 to 1 wt % MgO and about 0.1 to 0.5 wt % $TiO_2$. Pore sizes may range from about 0.001 to 10 microns, or ranging from 0.01 to 1 micron, and specific surface area, as measured in accordance with the BET method, may range from about 1 to 200 $m^2/g$, or ranging from 1 to 50 $m^2/g$.

## VIII. Methods of Use

Another aspect of the invention are methods of separating a gas component from a mixture of gases by either of pressure swing sorption, thermal swing sorption, or combination thereof comprising contacting a gas mixture with a composition or primary or secondary composite of the invention. Methods of the invention include those wherein the sorbed oxygen may then be used *in situ* for reacting with another compound while still sorbed, or desorbed and subsequently reacted, or combination of these (for example the oxygen may be desorbed from compositions and composites of the invention contained in a vessel and subsequently reacted, in the same vessel, with a compound to be oxidized). If used in thin membrane form, compositions and composites of the invention may serve as mixed ion and electron conductors, where $O_2$ atoms contacting one side of the membrane accept 2 electrons conducted through the membrane to form $O^{2-}$ ions, while a hydrocarbon flows past the other side of the membrane and reacts with $O^{2-}$ ions conducted through the membrane to form CO, $H_2$ and release 2 electrons. Reactions using the oxygen so sorbed or recovered, such as partial hydrocarbon oxidation, hydrocarbon steam reforming, hydrocarbon auto-thermal reforming, and the like, in a process mode selected from batch, semi-continuous, continuous or cyclic operation, are considered within the invention.

Aside from the use of compositions and composites of the invention in these methods, the methods are themselves known to skilled artisans. For example, the process descriptions in U.S. Pat. Nos. 6,143,203; 6,379,586 and 6,464,955, and U.S. Pub. Pat. Appl., 2002/0179887 A1 may be cited. As explained in U.S. Pat. No. 6,143,203, the processes of the invention may be carried out in a recirculating solids reactor system, comprises, in general, an oxygen sorption step and a hydrocarbon and/or an oxygen-containing hydrocarbon partial oxidation step. Although certain reactor systems are preferable to others for practice of the processes of the invention, the particular system in which the processes are carried out is a matter of choice. The configuration of the system forms no part of the invention. Although both the oxygen sorption step and the hydrocarbon partial oxidation step of the inventive processes may be carried out in a single reaction vessel system, it is preferred that these steps be carried out in an interconnected multi-vessel system which includes an oxygen sorption vessel and a partial oxidation reactor. Typically, the partial oxidation reactor may include one or more of a riser section, a fluidized bed section and a moving bed section. Commonly, the reactor comprises both a riser section and a fluidized bed section. Similarly, the unit in which the oxygen-sorption step is carried out may comprise a riser section, a fluidized bed section, a moving bed section or combinations of these. As explained in U.S. Pat. No. 6,379,586 the sorption/partial oxidation process of the invention may be carried out on a cyclical basis. It comprises a high temperature oxygen sorption step and a partial oxidation reaction step using the sorbed oxygen as the oxidant. The processes may be carried out in a system comprising a single sorption/reaction unit or a battery of sorption/reaction units operated in phase, or a plurality of sorption/reactor units or batteries of sorption/reaction units operated out of phase, whichever is desired. When a system comprising a single unit or a battery of units all of which are operated in phase is used, the sorption and partial oxidation steps are necessarily intermittent, whereas when a plurality of units are employed in parallel and operated out of phase, one or more units can be in oxygen sorption service while the partial oxidation reaction is being carried out in one or more other units. Sorption/partial oxidation cycles may be repeatedly carried out in a manner such that production of the desired partial oxidation products is substantially continuous. Further, as explained in U.S. Pat. No. 6,464,955, the processes of the invention may be used to produce oxygen from gases such as steam, carbon dioxide, sulfur oxides, nitrogen oxides. The feed gas from which the oxygen is produced may be, for example, an exhaust gas from a combustion process in which a fuel, such as coal, coke or petroleum derivatives, is burned. In one embodiment, the process of the invention is useful for carrying out partial oxidation processes that produce hydrogen and/or carbon monoxide, and perhaps additional partial oxidation products, using substantially pure oxygen that is abstracted and sorbed by an oxygen ion conducting ceramic from steam and/or carbon dioxide. The oxygen sorption step is carried out at high temperatures; accordingly, in this embodiment, the at least partially oxygen-saturated mixed conductor leaving the sorption step is at or near the preferred reaction temperature for the partial oxidation step. In another embodiment, the process can be used to remove harmful components such as sulfur oxides and nitrogen oxides from gas streams, such as waste gases from combustion processes.

Other methods of the invention include converting a light hydrocarbon ($C_5$ or less) into hydrogen and carbon monoxide by contacting one or more hydrocarbons with a particulate composition (or composite) of the invention, carried out in well-known bed-type reaction vessels, where the bed of particles is fluidized, semi-fluidized, or non-fluidized. Alternatively, membrane configurations may be employed, as discussed above. Partial hydrocarbon oxidation reactions are advantageous in that they are exothermic, and typically carried out at temperatures ranging from about 600 to about 1200°C. In these temperature regimes, the compositions and composites of the invention are well-suited, since the high temperature perovskite cubic structure predominates.

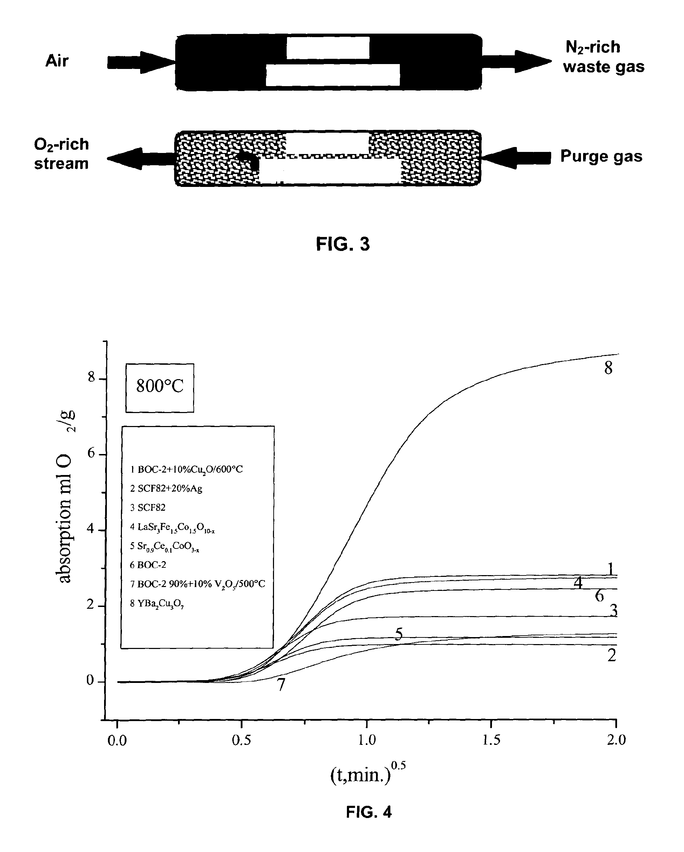

CAR is a Ceramic Auto-thermal Recovery process executed cyclically on conventionally shaped perovskites or related solids in a fixed-bed sorption-type arrangement at high temperature; as a rule at T > 700 °C. Using the compositions and composites of the invention this temperature may be reduced significantly, to T > 500°C. One scheme, illustrated in FIG. 3, illustrates a two-bed system that is run symmetrically. While exothermic sorption uptake of oxygen takes place in Bed 1 by passing air through it with a nitrogen-enriched waste gas leaving the bed, endothermic desorption of oxygen and its release as an oxygen-enriched product gas stream takes place in Bed 2, due to oxygen partial pressure decrease as a result of purging the bed with an inert gas. Appropriate heat management of the process system allows for overall autothermal conditions.

## IX. EXAMPLES

**EXAMPLE 1:** Oxygen sorption-desorption characteristics such as exchange-capacity data was measured by means of a home-built technique that utilized an amperometric Lambda sensor for oxygen detection and analysis. The Lambda sensor used was of type LSU 4.2 of the Bosch Company (Germany) with a voltage chosen at 0.6 V. At this voltage, the current does not depend on voltage. Calibration took place with mixtures of dry air and argon to arrive at oxygen concentrations between 1 vol. % and 100 vol. % . This resulted in a linear dependence between oxygen concentration in the gas and the current that passes the sensor. The gas flow could be switched between air (oxygen sorption uptake) and argon (with about 10 ppm oxygen-trace content) (oxygen desorption/release). The temperature was kept at 800 °C, in all experiments. Gas flow rates were established/measured at 6 l/hr for both air and argon.

Results of these experiments are shown in FIG. 4 as plots of oxygen uptake/release (ml g $^{-1}$) vs. square root of time (min $^{0.5}$). For purposes of screening and characterization, a series of mixed oxides of various types were investigated. Without addressing specific details at this instance it could be concluded from these measurements, that the perovskite-type material $YBa_2Cu_3O_{7-\delta}$ allows for the highest reversible oxygen uptake at a temperature of 800 °C. It exceeded that of the material, $La_{0.2}Sr_{0.8}Co_{0.6}Fe_{0.4}O_{3-\delta}$, by a factor of 3 to 4, with a "working capacity" exceeding that of the latter material by a factor of 3 to 5.

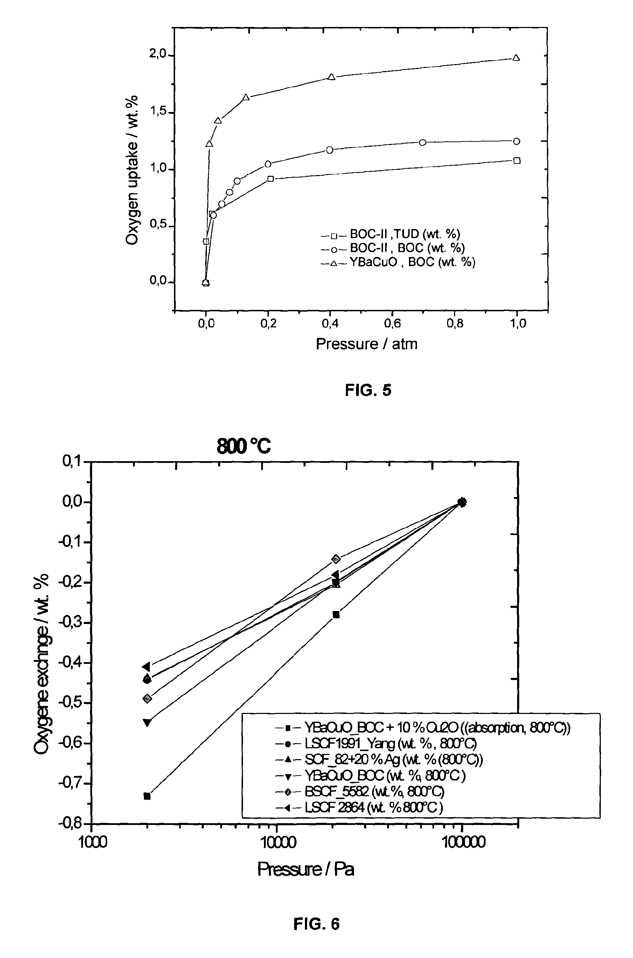

**EXAMPLE 2:** FIG. 5 shows oxygen sorption isotherms measured at 800 °C on two different perovskite compositions, *viz.*, $La_{0.2}Sr_{0.8}Co_{0.6}Fe_{0.4}O_{3-\delta}$ and $YBa_2Cu_3O_{7-\delta}$, *i.e.*, plots of oxygen uptake expressed in terms of weight percentage, wt.%, vs. oxygen partial pressure at constant temperature. These isotherms were obtained by means of a home-built high-temperature gravimetric spring-balance technique, the principle of which is described, for example, in F. Rouquerol, J. Rouquerol, K. Sing, "Adsorption by Powders and Porous Solids", Academic Press, London, 1999, p. 60.

FIG. 5 demonstrates sufficiently close oxygen-isotherm-curve courses for the BOC-II materials (specifically $La_{0.2}Sr_{0.8}Co_{0.6}Fe_{0.4}O_{3-\delta}$) prepared either in-house (denoted as BOC) or at the Technical University of Dresden (Germany) (denoted as TUD). The material coded as YBaCuO, which stands for a cuprate-based perovskite of the chemical composition $YBa_2Cu_3O_{7-\delta}$, exceeds $La_{0.2}Sr_{0.8}Co_{0.6}Fe_{0.4}O_{3-\delta}$ both in its absolute sorption uptake and "working capacity". A comparison of isotherms for oxygen between these two materials allows to select partial pressure differences as such that the "working capacity", $\Delta n$, on YBaCuO exceeds that of $La_{0.2}Sr_{0.8}Co_{0.6}Fe_{0.4}O_{3-\delta}$ by a factor of three, at least.

These results offer several options to enhance CAR-process performance efficiency: (1) reducing sorbent mass and adsorber sizes by about factor 3 if keeping constant all the other process parameters; (2) maximizing the cycling frequency of CAR processes towards their kinetic limits; (3) maximizing yield and specific product of overall processes; (4) minimizing the process temperature.

**EXAMPLE 3:** FIG. 6 shows oxygen sorption isotherms obtained at 800°C for five perovskite compositions, *i. e.,* $SrCa_{0.8}Fe_{0.2}O_{3-\delta}$, + 20 % Ag, $La_{0.1}Sr_{0.9}Co_{0.9}Fe_{0.1}O_{3-\delta}$, $La_{0.2}Sr_{0.8}Co_{0.6}Fe_{0.4}O_{3-\delta}$, $Ba_{0.5}Sr_{0.5}Co_{0.8}Fe_{0.2}O_{3-\delta}$, $YBa_2Cu_3O_{7-\delta}$ and $YBa_2Cu_3O_{7-\delta}$, + 10 % $Cu_2O$ composite, as plots of the reversibly exchanged oxygen amount δ' at given oxygen partial pressure $pO_2$ and temperature (*cf.*, above), expressed in terms of weight percentage, wt.%, *vs.* oxygen partial pressure at constant temperature, 800 °C. These isotherms were again measured by means of a home-built high-temperature gravimetric spring-balance technique, the principle of which is described, for example, in F. Rouquerol, J. Rouquerol, K. Sing, *"Adsorption by Powders and Porous Solids",* Academic Press, London, 1999, p. 60, except for the data for the material $La_{0.1}Sr_{0.9}Co_{0.9}Fe_{0.1}O_{3-\delta}$ abbreviated as LSCF1991 that were taken from a paper by Z.H.Yang and Y.S.Lin, *Solid State Ionics,* **176,** Issues 1-2, January 2005, pages 89-96.

The plot shows that the oxygen uptake abilities of the materials' sub-group $SrCa_{0.8}Fe_{0.2}O_{3-\delta}$, + 20 % Ag,

$La_{0.1}Sr_{0.9}Co_{0.9}Fe_{0.1}O_{3-\delta}$, $La_{0.2}Sr_{0.8}Co_{0.6}Fe_{0.4}O_{3-\delta}$ do not differ significantly at temperature 800 °C - $La_{0.2}Sr_{0.8}Co_{0.6}Fe_{0.4}O_{3-\delta}$ proven to be a state-of-the-art sorbent for the given application. The oxygen-uptake capacities of the materials $Ba_{0.5}Sr_{0.5}Co_{0.8}Fe_{0.2}O_{3-\delta}$, $YBa_2Cu_3O_{7-\delta}$ and $YBa_2Cu_3O_{7-\delta}$, + 10 % $Cu_2O$ composite exceed, however, those of the former materials increasingly significantly. The capacity for oxygen of the composite sorbent $YBa_2Cu_3O_{7-\delta}$, + 10 % $Cu_2O$ is even much higher by an unexpected large factor than that for the related parent material $YBa_2Cu_3O_{7-\delta}$.

Another aspect is that of the thermo-mechanical stability, which increases remarkably by forming so-called "cermet" compounds, exemplified here by that of $SrCa_{0.8}Fe_{0.2}O_{3-\delta}$, + 20 % Ag. This result shows a preference from a practical application point of view for the composite $SrCa_{0.8}Fe_{0.2}O_{3-\delta}$, + 20 % Ag over those other pure perovskite material formulations in that sub-group.

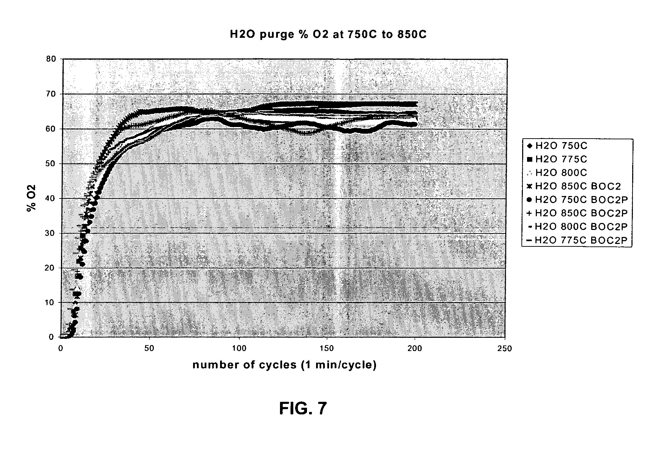

**EXAMPLE 4:** FIG. 7 shows results of specific CAR experiments over a temperature range, 750 to 850 °C, as percentage of oxygen in an air-based product gas stream at column outlet with steam as purge gas, as dependence on number of cycles performed (total length of cycle comprised by sorption and purge steps: 1 min). The air-inlet pressure was set at 780 torr. The flow rate of water purge stream was controlled manually and kept at 7.5 cm$^3$ min$^{-1}$ in all experiments. The charts show oxygen enrichment by the CAR process performed on three different BOC-II samples of one and the same chemical composition $La_{0.2}Sr_{0.8}Co_{0.6}Fe_{0.4}O_{3-\delta}$: (1) first extrudate batch (no notation), (2) a bead sample (notation: BOC2), (3) a pellet sample (notation: BOC2 P). The sorbent samples are essentially non-porous having a BET-type specific surface area < 0.5 m$^2$ g$^{-1}$.

After a start-up period, enrichment leads to nearly constant oxygen levels in the product stream amounting to about 60 to 70 % oxygen (with nitrogen and water as residuals), which are almost independent of both the type of secondary particle shape and process temperature.

**EXAMPLE 5:** A combination of results of Examples 2, 3 and 4, especially for results on materials of the sub-group $Ba_{0.5}Sr_{0.5}Co_{0.8}Fe_{0.2}O_{3-\delta}$, $YBa_2Cu_3O_{7-\delta}$ and $YBa_2Cu_3O_{7-\delta}$, + 10 % $Cu_2O$ composite and the possible chemical derivatives of the $YBa_2Cu_3O_{7-\delta}$ family, enables one to predict a significant increase in oxygen content in product streams based on air as feed gas for the CAR process. This holds for process versions with any type of oxygen partial pressure decrease in order to release oxygen from the bed: either by applying vacuum or purge by either steam or carbon dioxide or by their mixtures, or by other inert gases. In each of those cases, it becomes possible to enable an up-to-three-fold increase in oxygen percentage in the product gas stream. This means that resulting oxygen-enriched gas products would essentially be composed of oxygen only, with traces of nitrogen still retained in the bed and of the purge gas used.

Although the foregoing description is intended to be representative of the invention, it is not intended to in any way limit the scope of the appended claims.

**Claims**

**1.** A crystalline ceramic oxide composition comprising at least one compound of general formula (1), (2), or (3):

$$ABO_{3-\delta}, \tag{1}$$

$$A_xA'_{x'}B_yB'_{y'}O_{3-\delta}, \tag{2}$$

and

$$A_xA'_xA''_{x''} B_yB'_{y'} B''_{y''} O_{3-\delta}, \tag{3}$$

and combinations thereof, wherein:

A, A', and A'' are independently selected from ions of atoms having atomic number ranging from 57-71, inclusive, a cation of yttrium, ions of Group 1 atoms, ions of Group 2 atoms, and combinations of two or more, where Group 1 and Group 2 refer to the periodic table of elements;

B, B', and B'' are independently selected from d-block transition-metal ions selected from Mn, Cr, Fe, Co, Ni, and Cu;

x, x', x'', y, y', and y'' are each real numbers ranging from 0 to 1.0;

x + x' + x" ranges from about 0.8 to about 1.0; y + y' + y" = 1.0; and $\delta$ ranges from about 0.05 to about 0.5;

with the provisos that:

(1) when a Co ion is present at a plurality of B sites, then at least some of the B' sites are occupied by Fe ions, and at least some of the B" sites are occupied by Ni ions;
(2) when a Cu ion is presented at a plurality of B sites, then at least some of the B' and B" sites are occupied by one or more of Mn ions, Cr ions and Fe ions;
(3) when proviso (1) is true, then at least one other compound within general formulas (1), (2), and (3) is present.

2. A composition as claimed in claim 1 wherein A is an ion of atoms having atomic number ranging from 57-71, inclusive; A' is an Sr ion; and B and B' are selected from Ni, Co and Fe cations.

3. A composition as claimed in claim 1 or claim 2, which is a solid solution of compounds having the formula $La_xSr_{x'}Ni_yCo_{y'}Fe_{y''}O_{3-\delta}$, wherein x, x', y, y' and y" are all smaller than 1.05 but greater than 0, and one or more compounds within the general formulas $A_xB_yO_{3-\delta}$ and $A_xA'_{x'}B_yB'_{y'}O_{3-\delta}$.

4. A composition as claimed in claim 3, wherein 0.5<x<1, 0.05<x'<0.95, 0.0.05<y<0.95, 0.05<y'<0.95 and 0.05<y"<0.95.

5. A composition as claimed in claim 1, wherein the composition is a binary metal oxide $M'O_n$ and the active support is a compound within general formulas (1), (2), and (3).with n = 0.5 to 3.

6. A composition as claimed in claim 5, wherein the binary metal oxide has a crystallite size in its largest dimension ranging from about 0.1 to about 5 microns.

7. A composition as claimed in claim 1, the composition comprising:

(A) a matrix comprising a crystalline ceramic oxide composition within the general formula:

$$A_xA'_{x'}B_yB'_{y'}O_{3-\delta};$$

wherein:

A and A' are independently selected from ions of atoms having atomic number ranging from 57-71, inclusive, a cation of yttrium, ions of Group 1 atoms, ions of Group 2 atoms, and combination of two or more, where Group 1 and Group 2 refer to the periodic table of elements;

B and B' are independently selected from d-block transition metal ions;

x + x' = 1.0; y + y' = 1.0; and d ranges from about 0.05 to about 0.30; and

(B) one or more binary metal oxides dispersed on or in said matrix.

8. A composition as claimed in claim 7, wherein the binary metal oxide is selected from compounds within the general formula $MO_n$, where M is selected from Cu, Co, Ni, Bi, Pb, V, Mn, and Cr and n is a real number ranging from 0.5 to 3.

9. A crystalline ceramic oxide composition comprising one or more compounds selected from compounds of the general formula (4), (5), (6), (7), (8), (9), or (10):

$$A_2BO_{4-\delta} \tag{4}$$

$$A_2B_2O_{5-\delta} \tag{5}$$

$$AO(ABO_{3-\delta})_n \qquad (6)$$

$$AM_2Cu_3O_{7-\delta} \qquad (7)$$

$$Bi_4V_{2(1-x)}Me_{2x}O_{11-3x}, \qquad (8)$$

$$A'B'O_3 \text{ where B' is W or Mo;} \qquad (9)$$

$$A_2B_2O_{7-\delta}, \qquad (10)$$

and combinations thereof,
wherein:

A is selected from cations of atoms having atomic numbers ranging from 57-71, inclusive, a cation of yttrium, cations of Group 1 atoms, cations of Group 2 atoms, and combination of two or more, where Group 1 and Group 2 refer to the periodic table of elements;

B is a cation of a d-block transition metal of the periodic table of elements;

A' is a cation of Na or Li;

M is a metal cation selected from cations of Group 2 atoms of the periodic table of elements;

Me is a metal cation selected from cations of Cu, Bi, and Co atoms;

$x$ ranges from about 0.01 to about 1.00; and

$\delta$ ranges from about 0.05 to about 0.50.

10. A composition as claimed in claim 9, wherein said crystalline ceramic oxide is within general formula (4), A is a cation of atoms having atomic number ranging from 57-71, inclusive, or cation of yttrium, and B is selected from cations of Ni, Co and Fe atoms.

11. A composition as claimed in claim 9, wherein said crystalline ceramic oxide is of general formula (7) and comprises $YBa_2Cu_3O_{7-\delta}$.

12. A composition as claimed in claim 11, wherein said crystalline ceramic oxide of general formula (7) is selected from:

$Y_{1-x}La_xBa_{2-y}Sr_yCu_3O_{7-\delta}$ and

$Y_{1-x}La_xBa_{2-y}Ca_yCu_3O_{7-\delta}$, wherein

$x$ ranges from 0 to about 1, and $y$ ranges from about 0.5 to about 1.5 and $\delta'$ from 0.3 to 0.8.

13. A composition as claimed in claim 9, wherein said crystalline ceramic oxide is within general formula (8), and Me is a cation of Cu.

14. A composition as claimed in claim 9, wherein said crystalline ceramic oxide is within general formula (9), A' is a cation of Na, and B' is a cation of W.

15. A composition as claimed in claim 9, wherein said crystalline ceramic oxide is within general formula (10), A is Gd, and B is Ti.

**16.** A composition as claimed in claim 15, including a binary metal oxide within general formula $M'O_n$, wherein M' is selected from Cu, Co, Ni, Bi, Pb, V, Mn, and Cr; and n is a real number ranging from 0 to 3.

**17.** A composition as claimed in any one of the preceding claims, supported on an active support selected from porous inorganic materials, which are stable at temperatures ranging from about 500 to about 1000°C.

**18.** A composition as claimed in claim 17, wherein the active support comprises a perovskite-like compound selected from compounds of general formula (1), (2), (3), (4), (5), (6), (7), (8), (9), or (10).

**19.** A composition as claimed in claim 17 or 18, wherein the supported crystalline ceramic oxide has a shape selected from beads, pellets, saddles, cubes, cylinders, rings, pyramids, extrudates with any cross sectional shapes with or without holes, honey-combs with uniform channels and monoliths with random porosity and foam structure.

**20.** A composition as claimed in any one of claims 1 to 15, comprising intergrown layers of two or more compounds of general formula (1), (2), (3), (4), (5), (6), (7), (8), (9), or (10).

**21.** A composition as claimed in any one of claims 1 to 15, comprising stacked layers of two or more compounds of general formulae selected from (1), (2), (3), (4), (5), (6), (7), (8), (9), and (10).

**22.** A compound of the general formula $(RE)M_2Cu_3O_{7-\delta}$, or a doped version thereof, wherein RE is rare earth metal or yttrium, and M is an alkaline earth metal.

**23.** A compound as claimed in claim 22 wherein at least some of the RE atoms are selected from ions of lanthanum, praseodymium, gadolinium, and holmium.

**24.** A compound as claimed in claim 22, wherein the alkaline earth metal is selected from magnesium, calcium, strontium and barium.

**25.** A method of separating a gas component from a mixture of gases by a process selected from pressure swing adsorption, thermal swing adsorption, or combination thereof comprising contacting said gas mixture with a composition as claimed in claim any one of the preceding claims.

**26.** A method for converting hydrocarbons into hydrogen and carbon monoxide by sorbing oxygen on and contacting said hydrocarbons with a composition or compound as claimed in any one of claims 1 to 24.

**27.** A composition according to any one of claims 1 to 21, including at least one metal selected from rhodium, platinum, palladium, nickel and silver, the composition being a cermet.

**28.** Use of a composition according to any one of claims 1 to 21 and 28 or a compound according to claim 22 or claim 23 as a sorbent of oxygen.

**29.** Use of a composition according to any one of claims 1 to 21 and 28 or a compound according to claim 22 or claim 23 as a catalyst of the reaction between oxygen and a hydrocarbon to form hydrogen and carbon monoxide.

FIG. 1

FIG. 2

**FIG. 3**

800°C

absorption ml $O_2/g$

1 BOC-2+10%$Cu_2O$/600°C

2 SCF82+20%Ag

3 SCF82

4 $LaSr_3Fe_{1.5}Co_{1.5}O_{10-x}$

5 $Sr_{0.9}Ce_{0.1}CoO_{3-x}$

6 BOC-2

7 BOC-2 90%+10% $V_2O_5$/500°C

8 $YBa_2Cu_3O_7$

$(t,min.)^{0.5}$

**FIG. 4**

**FIG. 5**

**FIG. 6**

H2O purge % O2 at 750C to 850C

**FIG. 7**